# FASCICULE DE BREVET EUROPEEN

(11) **EP 1 422 542 B1**
(45) Date de publication et mention de la délivrance du brevet: **09.01.2008**
(21) Numéro de dépôt: 03300210.6
(22) Date de dépôt: 13.11.2003
(51) Int. Cl.: G02B 6/44

(54) **Boîtier de raccordement de câbles à fibres optiques résistant aux très hautes températures**
Temperaturresistentes Verbindungsgehäuse für faseroptische Kabel
Temperature resistant connection housing for fibre optic cables

(30) Priorité: 22.11.2002 FR 0214629
(43) Date de publication de la demande: 26.05.2004
(73) Titulaire: Nexans, 75008 Paris (FR)
(72) Inventeur: Vincent, Alain Nexans, 77230 Juilly (FR); Apere, Rodolphe Nexans, 78570 Andresy (FR)
(74) Mandataire: Feray, Valérie

(56) Documents cités:
- DE-C- 4 140 701
- US-A- 3 441 658
- US-A- 4 737 600
- US-A- 4 822 953
- US-A- 5 007 701

## Description

La présente invention concerne un boîtier de raccordement de câbles à fibres optiques résistant aux très hautes températures. Elle concerne en particulier un tel boîtier destiné à être utilisé pour raccorder des câbles à fibres optiques installés notamment dans des tunnels routiers ou ferroviaires.

Dans ces conditions, et à l'heure actuelle, les exigences imposées à tous les dispositifs installés dans des tunnels sont de plus en plus élevées. C'est le cas pour les câbles optiques, qui possèdent une structure très spécifique leur permettant de continuer à fonctionner à des températures pouvant dépasser 900°C et ce pendant une durée de 90 minutes sans que le signal optique transmis subisse une atténuation. On dit alors que le câble conserve son intégrité en cas d'incendie.

Ces exigences sont donc également imposées aux boîtiers de raccordement de ces câbles qui sont disposés à intervalles réguliers le long de ce type de tunnels.

Ces exigences de résistance et d'intégrité en cas d'incendie sont relativement récentes, de sorte qu'il n'existe pas actuellement sur le marché de boîtier de raccordement qui y réponde.

On connaît déjà par ailleurs des boîtiers de raccordement de câbles optiques utilisés pour le raccordement des câbles OPGW et qui sont aptes à résister à des températures élevées, mais largement inférieures à 900°C. Un boîtier de ce type comporte une enveloppe en acier inoxydable contenant une ou plusieurs cassettes de raccordement de fibres optiques. Les câbles à fibres optiques à raccorder pénètrent à l'intérieur d'un tel boîtier par l'intermédiaire d'un système d'entrée de câbles qui empêche la pénétration de l'air chaud et assure l'étanchéité à l'eau.

Le but de a présente invention est donc de mettre au point un boîtier de raccordement de câbles à fibres optiques assurant l'intégrité de ces derniers à des températures supérieures ou égales à 900°C pendant au moins 90 minutes.

La présente invention propose à cet effet un boîtier de raccordement de câbles à fibres optiques comprenant une enveloppe métallique externe contenant au moins une cassette de raccordement de fibres optiques, ladite enveloppe étant munie d'un système d'entrée d'au moins deux câbles à fibres optiques à raccorder, ledit système empêchant la pénétration d'air chaud à l'intérieur dudit boîtier,ledit boîtier étant caractérisé en ce qu'il comporte une enveloppe interne en un matériau calorifuge de faible conductivité thermique contenant la dite cassette, ledit matériau calorifuge étant tel qu'il est apte à résister à une température d'au moins 900°C, de manière qu'une atténuation maximale de 0,5 dB desdites fibres optiques au niveau de leurs épissures soit maintenue pendant au moins 90 minutes.

Ainsi, grâce à l'invention, les très fortes chaleurs susceptibles d'exister dans l'environnement d'un boîtier de raccordement de câbles à fibres optiques notamment en cas d'incendie, ne se propagent pas à l'intérieur de ce boîtier dans la zone où les fibres optiques sont mises à nu, de sorte que les câbles à fibres optiques ainsi raccordés peuvent continuer à transmettre sans augmentation sensible de leur atténuation pendant une période suffisante pour répondre aux normes exigées en la matière. On considère qu'une atténuation maximum de 0,5 dB par épissure est acceptable pour que l'intégrité du câble soit maintenue.

De manière préférentielle, ladite enveloppe interne est en contact avec ladite enveloppe métallique externe sur la majeure partie de sa surface intérieure. Ceci peut présenter des avantages pour certains matériaux calorifuges, notamment les silicates de calcium.

Selon une autre caractéristique avantageuse, aucune pièce conductrice de la chaleur en contact avec ladite enveloppe externe ne traverse ladite enveloppe interne. Ceci empêche la forte chaleur à laquelle est soumise l'enveloppe externe de pénétrer dans l'environnement direct des fibres optiques.

Selon encore une autre caractéristique avantageuse de l'invention, la ou lesdites cassettes de raccordement de fibres optiques sont également en un matériau calorifuge apte à résister à une température de 900°C au moins sans subir de déformation sensible. Cette mise en oeuvre permet d'accroître encore la résistance à la chaleur du boîtier selon l'invention.

Le matériau calorifuge est par exemple un silicate de calcium.

D'autres caractéristiques et avantages de la présente invention apparaîtront à la lecture de la description qui va suivre d'un mode de réalisation de la présente invention, donné à titre illustratif et nullement limitatif.

Dans les figures suivantes :
- la figure 1 est une vue en perspective éclatée d'un boîtier de raccordement selon l'invention et des câbles optiques qui y pénètrent pour être raccordés,
- la figure 2 est une vue en coupe longitudinale du boîtier de la figure 1.

Dans ces figures, les éléments communs portent les mêmes numéros de référence.

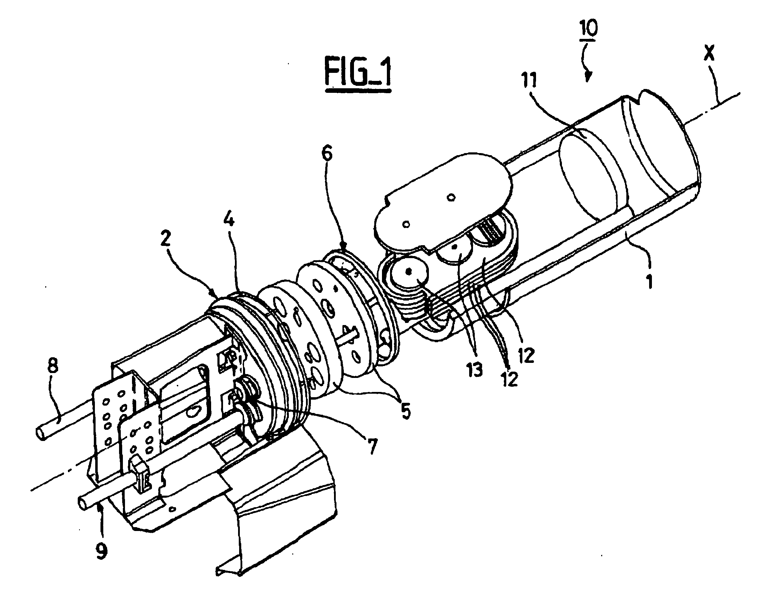

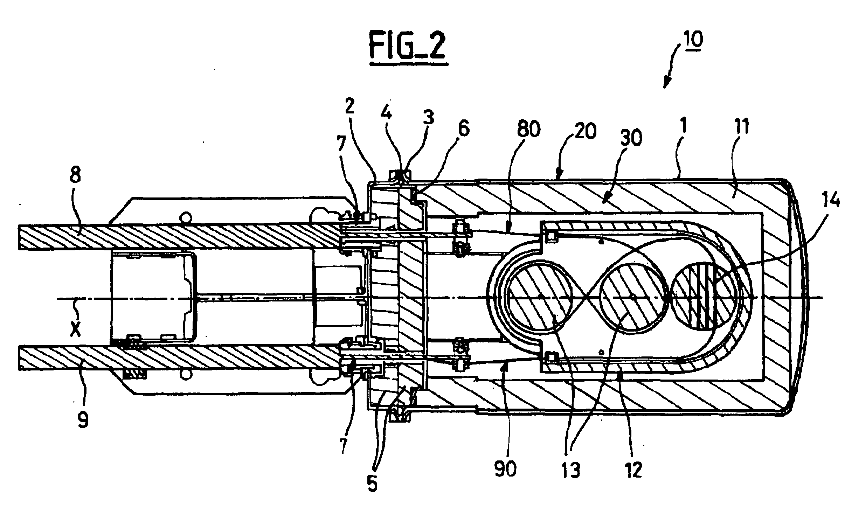

On voit aux figures 1 et 2 un boîtier de raccordement 10 selon l'invention. Ce boîtier de raccordement comporte une cloche externe métallique 1, par exemple en acier inoxydable. La cloche 1 est munie à sa base d'une embase 2, également en acier inoxydable, solidaire de la cloche 1 grâce à un collier 3 (voir figure 2), de manière à former une enveloppe métallique 20. Un joint d'étanchéité à l'eau 4 est inséré sous le collier 3 au niveau de la jonction de l'embase 2 et de la cloche 1. Parallèlement au fond de l'embase 2 et à l'intérieur de cette dernière, orthogonalement à l'axe longitudinal X de l'enveloppe 1, est disposée, selon l'invention, une double isolation 5 en un matériau calorifuge de faible conductivité thermique, puis un joint annulaire 6 d'étanchéité thermique.

L'ensemble formé de l'embase 2 et de la double isolation 5 est traversé par exemple en deux points par un système d'étanchéité 7 composé d'un presse-étoupe en acier inoxydable et d'un joint silicone haute température pour la pénétration de deux extrémités de câbles à fibres optiques 8 et 9 à raccorder. Les câbles à fibres optiques 8 et 9 sont des câbles spécifiques destinés à être utilisés aux hautes températures de manière à répondre aux exigences requises dans le domaine des tunnels routiers ou ferroviaires, notamment en cas d'incendie, c'est-à-dire à continuer de fonctionner pendant au moins 90 minutes même lorsqu'ils sont soumis à des températures de 900 °C.

Les câbles optiques 8 et 9, préalablement dégainés, sont introduits dans l'enveloppe 20 avec leurs faisceaux de fibres optiques respectifs 80 et 90 à nu au travers des systèmes d'étanchéité 7.

Selon l'invention, afin de protéger les fibres optiques mises à nu des fortes chaleurs liées par exemple à un incendie, et de conférer ainsi au boîtier 10 la résistance requise aux hautes températures, le boîtier 10 comporte en outre une cloche interne 11 en un matériau calorifuge de faible conductivité thermique en contact avec la cloche métallique 1 sur la majeure partie de sa surface intérieure. Le matériau calorifuge est tel qu'il est apte à résister à une température de 900°C au moins sans entraîner d'augmentation sensible de l'atténuation des fibres optiques. Dans un mode de réalisation préféré de l'invention, ce matériau est un silicate de calcium, qui peut être employé également pour la double isolation 5. L'ensemble de la cloche interne 11 et de la double isolation 5 forme une enveloppe interne 30.

Comme on le voit en figure 2, étant donné que la cloche 1 est légèrement courbée à sa partie supérieure, la cloche interne 11 ne vient pas au contact direct de sa surface intérieure à ce niveau. Cependant, l'enveloppe interne 30 vient au contact de l'enveloppe externe 20 sur tout le reste de sa surface intérieure, ce qui confère au boîtier selon l'invention une très haute résistance à l'incendie. Il est préférable, notamment lorsque le matériau calorifuge est un silicate de calcium, que le contact se fasse sur la majeure partie de la surface intérieure de l'enveloppe externe 20, sinon les espaces laissés vides (et par exemple remplis d'air) entre les deux enveloppes risquent de diminuer la résistance thermique du boîtier.

On remarquera par ailleurs que, de manière très avantageuse, aucune pièce conductrice de la chaleur et qui est en contact avec l'enveloppe externe 20 ne traverse ou n'est en contact avec l'enveloppe interne 30, pour limiter les risques d'échauffement.

Par ailleurs, le boîtier 10 contient une pluralité de cassettes de raccordement 12 de structure en soi bien connue de l'homme de l'art et que l'on ne décrira pas plus en détail ici. Les cassettes de raccordement servent à effectuer la connexion entre les fibres issues du faisceau 80 et celles issues du faisceau 90, et présentent de manière classique des tambours de lovage 13 pour loger la surlongueur de fibre nécessaire au raccordement par épissure 14 (voir figure 2).

Selon une variante avantageuse de la présente invention, les cassettes 12 ainsi que les tambours de lovage 13 sont également en un matériau calorifuge de faible conductivité thermique tel que le silicate de calcium.

Bien entendu, la présente invention n'est pas limitée au mode de réalisation qui vient d'être décrit.

Notamment, le matériau calorifuge à faible conductivité thermique peut être choisi parmi les matériaux réfractaires ou autres matériaux susceptibles de résister à des températures supérieures ou égales à 900°C sans subir de déformation sensible. Ce peut être par exemple, de manière non limitative, un acier réfractaire, de la brique réfractaire, du verre, du béton cellulaire, une céramique, de la laine de roche, de la laine de verre, une mousse polyuréthane, une mousse phénolique ou encore des fibres minérales.

Par ailleurs, le boîtier selon l'invention peut servir à raccorder plus de deux câbles entre eux, et par exemple quatre.

Enfin, on pourra remplacer tout moyen par un moyen équivalent sans sortir du cadre de l'invention.

## Revendications

1. Boîtier de raccordement (10) de câbles à fibres optiques (8, 9) comprenant une enveloppe métallique externe (20) contenant au moins une cassette de raccordement (12) de fibres optiques (80, 90), ladite enveloppe (20) étant munie d'un système d'entrée (7) d'au moins deux câbles à fibres optiques à raccorder (8, 9), ledit système empêchant la pénétration d'air chaud à l'intérieur dudit boîtier (10), ledit boîtier étant **caractérisé en ce qu'**il comporte une enveloppe interne (30) en un matériau calorifuge de faible conductivité thermique contenant la dite cassette, ledit matériau calorifuge étant tel qu'il est apte à résister à une température d'au moins 900°C de manière qu'une atténuation maximale de 0,5 dB desdites fibres optiques au niveau de leurs épissures soit maintenue pendant au moins 90 minutes.

2. Boîtier de raccordement selon la revendication 1 **caractérisé en ce que** ladite enveloppe interne (30) est en contact avec ladite enveloppe métallique externe (30) sur la majeure partie de sa surface intérieure.

3. Boîtier de raccordement selon l'une des revendications 1 ou 2 **caractérisé en ce qu'**aucune pièce conductrice de la chaleur en contact avec ladite enveloppe externe (20) ne traverse ladite enveloppe interne (30).

4. Boîtier de raccordement selon l'une des revendications 1 à 3 **caractérisé en ce que** la ou lesdites cassettes de raccordement de fibres optiques (12) sont également en un matériau calorifuge apte à résister à une température de 900°C au moins sans subir de déformation sensible.

5. Boîtier de raccordement selon l'une des revendications 1 à 4 **caractérisé en ce que** ledit matériau calorifuge est un silicate de calcium.

6. Boîtier de raccordement selon l'une des revendications 1 à 4 **caractérisé en ce que** ledit matériau calorifuge est choisi parmi un acier réfractaire, de la brique réfractaire, du verre, du béton cellulaire, une céramique, de la laine de roche, de la laine de verre, une mousse polyuréthane, une mousse phénolique et des fibres minérales

## Claims

1. Junction box (10) for optical fiber cables (8, 9) comprising an outer metal shell (20) containing at least one coupling cassette (12) for optical fibers (80, 90), said shell (20) being provided with an inlet system (7) for at least two optical fiber cables to be connected (8, 9), said system preventing penetration of hot air in said box (10), said box being **characterized in that** it comprises an inner shell (30) of a heat resistant material with low thermal conductivity containing said cassette, said heat resistant material being able to resist a temperature of at least 900° C, such that a maximum attenuation of 0.5 dB of said optical fibers at the level of their splices is maintained for at least 90 minutes.

2. Junction box according to claim 1, **characterized in that** said inner shell (30) is in contact with said outer metal shell (30) on the majority of its interior surface.

3. Junction box according to one of claims 1 or 2, **characterized in that** no heat conducting part in contact with said outer shell (20) crosses said inner shell (30).

4. Junction box according to one of claims 1 to 3, **characterized in that** said coupling cassette(s) for the optical fibers (12) are also of a heat resistant material able to resist a temperature of at least 900° without undergoing substantial strain.

5. Junction box according to one of claims 1 to 4, **characterized in that** said heat resistant material is a calcium silicate.

6. Junction box according to one of claims 1 to 4, **characterized in that** said heat resistant material is chosen among a refractory steel, refractory brick, glass, cellular concrete, ceramic, rock wool, glass wool, phenolic foam and mineral fibers.

## Patentansprüche

1. Gehäuse (10) zum Anschließen von Lichtwellenleiter-Kabeln (8, 9), umfassend eine äußere Metallkapselung (20), die mindestens eine Kassette (12) für den Anschluss von Lichtwellenleitern (80, 90) enthält, wobei die Kapselung (20) mit einem System (7) für den Eingang von mindestens zwei anzuschließenden Lichtwellenleiter-Kabeln (8, 9) versehen ist, wobei das System das Eindringen von Warmluft in das Innere des Gehäuses (10) verhindert, wobei das Gehäuse **dadurch gekennzeichnet ist, dass** es eine innere Kapselung (30) aus einem Wärmedämmstoff geringer spezifischer Wärmeleitfähigkeit aufweist, die Kassette enthaltend, wobei der Wärmedämmstoff derart ist, dass er in der Lage ist, einer Temperatur von mindestens 900°C standzuhalten, so dass eine maximale Dämpfung von 0,5 dB der Lichtwellenleiter auf Höhe ihrer Spleißstellen während mindestens 90 Minuten aufrecht erhalten wird.

2. Anschlussgehäuse nach Anspruch 1,
**dadurch gekennzeichnet, dass** die innere Kapselung (30) mit der äußeren Metallkapselung (20) auf dem Großteil ihrer Innenfläche in Kontakt ist.

3. Anschlussgehäuse nach Anspruch 1 oder 2,
**dadurch gekennzeichnet, dass** kein einziges Wärme leitendes Teil, das mit der äußeren Kapselung (20) in Kontakt ist, die innere Kapselung (30) durchquert.

4. Anschlussgehäuse nach einem der Ansprüche 1 bis 3,
**dadurch gekennzeichnet, dass** die Kassette(n) (12) für den Anschluss von Lichtwellenleitern ebenfalls aus einem Wärmedämmstoff ist bzw. sind, der in der Lage ist, einer Temperatur von mindestens 900°C standzuhalten, ohne deutliche Verformung durchzumachen.

5. Anschlussgehäuse nach einem der Ansprüche 1 bis 4,
**dadurch gekennzeichnet, dass** der Wärmedämmstoff ein Calciumsilikat ist.

6. Anschlussgehäuse nach einem der Ansprüche 1 bis 4,
**dadurch gekennzeichnet, dass** der Wärmedämmstoff aus hitzebeständigem Stahl, feuerfestem Stein, Glas, Zellbeton, Keramik, Gesteinsfaser, Glaswolle, Polyurethanschaum, Phenolharzschaum und Mineralfasern ausgewählt ist.
